# FASCICULE DE BREVET EUROPEEN

(11) **EP 3 732 766 B1**
(45) Date de publication et mention de la délivrance du brevet: **24.11.2021**
(21) Numéro de dépôt: 18842550.8
(22) Date de dépôt: 24.12.2018
(51) Int. Cl.: H02J 7/00, H04L 12/40, H04Q 9/00, H01M 10/42

(54) **BATTERIE D'ACCUMULATEURS ÉLECTRIQUES**
AKKUPACK
BATTERY PACK

(30) Priorité: 27.12.2017 FR 1763251
(43) Date de publication de la demande: 04.11.2020
(73) Titulaire: Commissariat à l'Energie Atomique et aux Energies Alternatives, 75015 Paris (FR)
(72) Inventeur: DESPESSE, Ghislain, 38340 VOREPPE (FR); FERNANDEZ, Eric, 38760 SAINT PAUL DE VARCES (FR); BACQUET, Sylvain, 38470 CHASSELAY (FR); CASSARINO, Leandro, 33400 TALENCE (FR); LOPEZ, Yan, 38140 RENAGE (FR); THOMAS, Remy, 38130 ECHIROLLES (FR)
(74) Mandataire: Cabinet Beaumont
(86) Numéro de dépôt international: PCT/FR2018/053545
(87) Numéro de publication internationale: WO 2019/129993

(56) Documents cités:
- WO-A1-2016/170314
- US-A1- 2013 320 772
- US-A1- 2015 207 355

## Description

La présente demande de brevet revendique la priorité de la demande de brevet français 2- FR17/63251.

### Domaine

La présente invention concerne une batterie d'accumulateurs électriques, également appelée pack batterie.

### Exposé de l'art antérieur

Il est connu de réaliser une batterie comprenant plusieurs étages ou modules dans chacun desquels des accumulateurs, également appelés cellules, peuvent être connectés en série ou en parallèle par des interrupteurs commandables. Une telle batterie est adaptée à fournir une tension dont la forme d'onde peut varier dans le temps en faisant varier au cours du temps la connexion des cellules via la fermeture ou l'ouverture des interrupteurs.

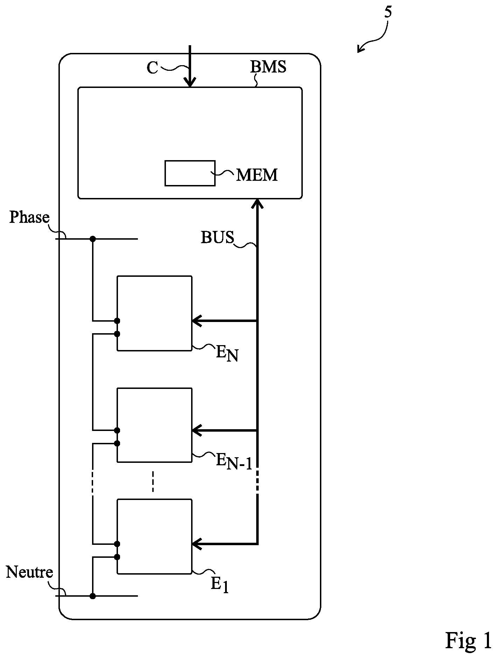

La figure 1 représente un exemple d'une telle batterie 5. La batterie 5 comprend N modules E₁ à E_{N}. Le nombre N est un nombre entier pouvant être compris entre 1 et 50. Chaque module comprend une borne positive B+ et une borne négative B- et plusieurs cellules, non représentées, pouvant être connectées entre elles en série et/ou en parallèle par l'intermédiaire d'interrupteurs, non représentés, entre les bornes B+ et B-. Les modules E₁ à E_{N} peuvent être connectés en série entre une première borne Neutre de la batterie 5 et une deuxième borne Phase de la batterie 5. Un exemple d'une telle batterie est décrit dans la demande de brevet WO 2012/117110.

La batterie 5 comprend un circuit BMS de commande des modules E₁ à E_{N}, appelé circuit de commande maître par la suite. Le circuit de commande maître BMS peut échanger des données avec chaque module E₁ à E_{N} par l'intermédiaire d'un bus bidirectionnel BUS de transmission de données. Chaque module E₁ à E_{N} comprend un circuit de commande, non représenté, des interrupteurs du module, appelé circuit de commande esclave par la suite, à partir des commandes fournies par le circuit de commande maître BMS. Chaque module comprend, en outre, des capteurs, non représentés, par exemple des capteurs de la tension aux bornes de chaque cellule du module, des capteurs du courant fourni par chaque cellule du module et/ou des capteurs de la température de chaque cellule du module. Le circuit de commande esclave de chaque module E₁ à E_{N} est adapté à transmettre au circuit de commande maître BMS des données représentatives des mesures de tensions, de courants et/ou de températures par le bus de transmission de données BUS.

Le circuit de commande maître BMS peut recevoir une consigne C, par exemple une consigne de tension ou de courant transmettre des premières données, par exemple le nombre total de cellules à connecter, aux modules par l'intermédiaire du bus de transmission de données BUS à partir desquelles le circuit de commande esclave de chaque module connecte ou déconnecte ses cellules de façon à obtenir la tension et/ou le courant souhaités entre les bornes Phase et Neutre de la batterie 5.

Il est souhaitable que la sélection des cellules à connecter/déconnecter soit réalisée en assurant que chaque cellule fonctionne dans sa plage de fonctionnement optimale en fonction des mesures de tensions, de courants et de température fournies par les modules. En particulier, il est souhaitable de réaliser un équilibrage des cellules, c'est-à-dire que la sélection des cellules soit réalisée de façon que les écarts entre les états de charge des cellules soient en permanence les plus faibles possibles. Il est en outre souhaitable que la sélection des cellules tienne compte d'une éventuelle défaillance d'une cellule de façon, par exemple, à exclure cette cellule de la sélection.

Pour effectuer la fonction d'équilibrage, le circuit de commande maître BMS peut déterminer un classement des cellules selon des niveaux de priorité, les cellules les plus prioritaires du classement étant celles qui devraient être sélectionnées les premières. Le classement de priorités, également appelé table de priorités, est susceptible d'évoluer au cours du fonctionnement de la batterie, notamment suite à l'évolution des états de charges des cellules ou suite à la défaillance d'une cellule.

La table de priorités peut être stockée au niveau de chaque module et c'est le circuit de commande esclave de chaque module qui, à partir du nombre total de cellules à connecter et de la table de priorités, détermine les cellules du module à connecter/déconnecter. Lorsque la table de priorités est modifiée, le circuit de commande maître peut transmettre aux circuits de commande esclaves des deuxièmes données représentatives de la mise à jour de la table de priorités.

Pour certaines applications, la consigne reçue par le circuit de gestion BMS peut varier rapidement de sorte qu'il peut être difficile d'assurer que le circuit de commande maître BMS transmette de façon convenable les premières données pour le suivi de la consigne et les deuxièmes données relatives aux mises à jour de la table de priorités.

Le document WO2016/170314 décrit un système de batteries comprenant un système de commande.

### Résumé

Ainsi, un objet d'un mode de réalisation est de prévoir une batterie qui pallie au moins certains des inconvénients des batteries décrites précédemment.

Un autre objet d'un mode de réalisation est que la transmission des données du circuit de commande maître aux circuits de commande esclaves des modules relatives au suivi de la consigne ne soit pas perturbée par la modification du classement de priorités.

Ainsi, un mode de réalisation prévoit un procédé de commande d'une batterie comprenant un premier circuit de commande et plusieurs modules disposés en série entre des première et deuxième bornes, chaque module comprenant des troisième et quatrième bornes, au moins l'une des troisième et quatrième bornes de chaque module étant reliée à l'une des troisième et quatrième bornes d'un autre module, chaque module comprenant des accumulateurs électriques et des interrupteurs reliant les accumulateurs entre eux et aux troisième et quatrième bornes du module et un deuxième circuit de commande des interrupteurs, la batterie comprenant en outre au moins un premier bus de transmission de données reliant le premier circuit de commande à chaque deuxième circuit de commande, le procédé comprenant la transmission, par le premier circuit de commande aux deuxièmes circuits de commande, de premières données représentatives d'une configuration d'accumulateurs électriques à obtenir pour suivre une consigne de fourniture d'une tension et/ou d'un courant entre les première et deuxième bornes, les deuxièmes circuit de commande connectant ou déconnectant les accumulateurs électriques à partir desdites premières données et d'un classement de priorités des accumulateurs électriques. Le procédé comprend, en outre, les étapes suivantes:
a) détermination par le premier circuit de commande d'une nouvelle version du classement de priorités ;
b) transmission, par le premier circuit de commande à chaque deuxième circuit de commande, de deuxièmes données représentatives d'au moins une partie de la nouvelle version du classement de priorités ;
c) transmission, par chaque deuxième circuit de commande au premier circuit de commande, de troisièmes données indiquant la réception par le deuxième circuit de commande de ladite au moins une partie de la nouvelle version du classement de priorités ; et
d) transmission, par le premier circuit de commande aux deuxièmes circuits de commande, d'une commande d'utilisation de la nouvelle version du classement de priorités.

Selon un mode de réalisation, la batterie comprend en outre un deuxième bus de transmission de données reliant le premier circuit de commande à chaque deuxième circuit de commande. Le premier circuit de commande transmet les premières données aux deuxièmes circuits de commande par le premier bus et transmet les deuxièmes données aux deuxièmes circuits de commande par le deuxième bus.

Selon un mode de réalisation, les deuxièmes circuits de commande transmettent les troisièmes données au premier circuit de commande par le deuxième bus.

Selon un mode de réalisation, le premier circuit de commande transmet la commande d'utilisation de la nouvelle version du classement de priorités aux deuxièmes circuits de commande par le premier bus.

Selon un mode de réalisation, le premier circuit de commande transmet les premières données aux deuxièmes circuits de commande par le premier bus à un premier débit et transmet les deuxièmes données aux deuxièmes circuits de commande par le deuxième bus à un deuxième débit inférieur au premier débit.

Selon un mode de réalisation, les premières données sont représentatives du nombre d'accumulateurs à connecter en série pour suivre la consigne.

Selon un mode de réalisation, les deuxièmes données sont représentatives de la totalité du classement de priorités.

Selon un mode de réalisation, les deuxièmes données sont représentatives de la partie du classement de priorités des accumulateurs électriques de l'un des modules.

Un mode de réalisation prévoit également une batterie comprenant un premier circuit de commande et plusieurs modules disposés en série entre des première et deuxième bornes, chaque module comprenant des troisième et quatrième bornes, au moins l'une des troisième et quatrième bornes de chaque module étant reliée à l'une des troisième et quatrième bornes d'un autre module, chaque module comprenant des accumulateurs électriques et des interrupteurs reliant les accumulateurs entre eux et aux troisième et quatrième bornes du module et un deuxième circuit de commande des interrupteurs, la batterie comprenant en outre un premier bus de transmission de données reliant le premier circuit de commande à chaque deuxième circuit de commande et un deuxième bus de transmission de données reliant le premier circuit de commande à chaque deuxième circuit de commande. Le premier circuit de commande est configuré pour transmettre, aux deuxièmes circuits de commande, des premières données représentatives d'une configuration d'accumulateurs électriques à obtenir pour suivre une consigne de fourniture d'une tension et/ou d'un courant entre les première et deuxième bornes, les deuxièmes circuits de commande étant configurés pour connecter ou déconnecter les accumulateurs électriques à partir desdites premières données et d'un classement de priorités des accumulateurs électriques. Le premier circuit de commande est configuré pour déterminer une nouvelle version du classement de priorités et à transmettre à chaque deuxième circuit de commande des deuxièmes données représentatives d'au moins une partie de la nouvelle version du classement de priorités. Chaque deuxième circuit de commande est configuré pour transmettre au premier circuit de commande des troisièmes données indiquant la réception par le deuxième circuit de commande de ladite au moins une partie de la nouvelle version du classement de priorités. Le premier circuit de commande est configuré pour transmettre aux deuxièmes circuits de commande une commande d'utilisation de la nouvelle version du classement de priorités.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente, de façon partielle et schématique, un exemple d'une batterie d'accumulateurs ;
la figure 2 représente, de façon partielle et schématique, un mode de réalisation d'une batterie d'accumulateurs ;
la figure 3 représente, de façon partielle et schématique, un exemple de module de la batterie de la figure 1 ou 2 ;
la figure 4 est un chronogramme illustrant les données échangées entre le circuit de commande maître et les circuits de commande esclaves de la batterie représentée en figure 2 pour un mode de réalisation d'un procédé de commande de la batterie ; et
la figure 5 est un chronogramme illustrant les données échangées entre le circuit de commande maître et les circuits de commande esclaves de la batterie représentée en figure 1 pour un mode de réalisation d'un procédé de commande de la batterie.

### Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les fonctions classiques réalisées par les circuits de commande maître et esclave d'une batterie d'accumulateurs telles que l'équilibrage des cellules sont bien connues de l'homme du métier et ne sont pas décrites plus en détail par la suite. Dans la suite de la description, les expressions "sensiblement", "environ", "approximativement" et "de l'ordre de" signifient "à 10 % près", de préférence à 5 % près.

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutées adapté à fournir une tension variable à une charge. Chaque cellule du système à cellules commutées peut correspondre à un élément de stockage de charges électriques ou à un générateur électrique. Un exemple d'élément de stockage de charges électriques est par exemple un accumulateur électrique ou un condensateur. Un exemple de générateur électrique est par exemple une pile à combustible, une pile zinc-air, une cellule photovoltaïque ou un système de récupération d'énergie, notamment une mini-éolienne ou une mini-turbine. Le système à cellules commutées peut comprendre seulement des éléments de stockage de charges électriques, seulement des générateurs électriques ou à la fois des éléments de stockage de charges électriques et des générateurs électriques. Lorsque le système à cellules commutées comprend seulement des générateurs électriques, l'utilisation est théoriquement seulement en mode décharge. Néanmoins, en cas de puissance réactive, pour des brefs passages par une puissance négative à chaque période, l'inertie du générateur peut suffire à lisser la puissance, par exemple en raison de l'inertie de rotation et des capacités parasites. En outre, chaque générateur peut être connecté en parallèle d'un élément résistif, afin d'accepter des puissances négatives, en dissipant cette énergie. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.

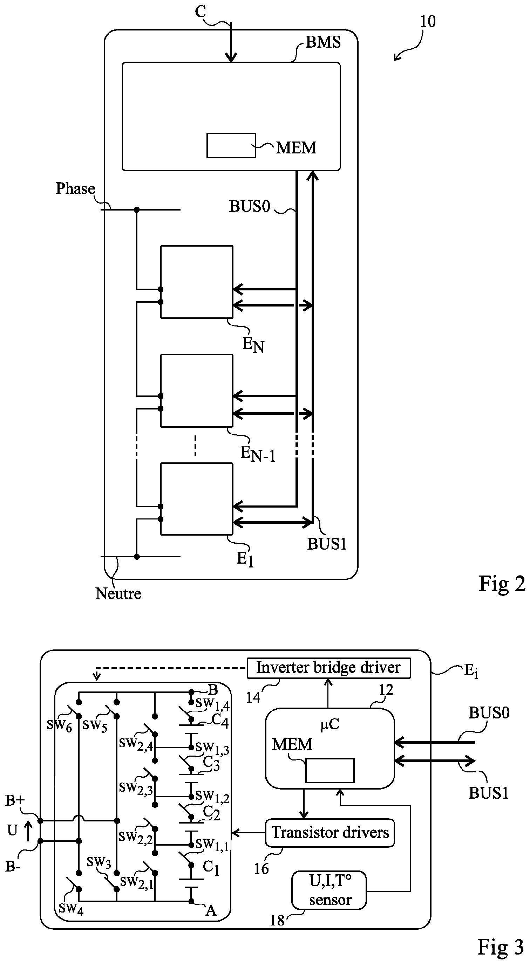

La figure 2 représente un mode de réalisation d'une batterie 10. La batterie 10 comprend l'ensemble des éléments de la batterie 5 représentée en figure 1 à la différence que le bus BUS est remplacé par deux bus BUS0 et BUS1 qui relient chacun le circuit de commande maître BMS à chaque module E₁ à E_{N}.

Le bus BUS0 est un bus rapide, c'est-à-dire un bus sur lequel des données sont transmises avec un débit supérieur à 3 mégabits par seconde, de préférence compris entre 5 mégabits par seconde et 7 mégabits par seconde. Le bus BUS0 peut être un bus unidirectionnel. A titre d'exemple, le bus BUS0 est un bus selon la norme RS485.

Le bus BUS1 est un bus lent, c'est-à-dire sur lequel des données sont transmises avec un débit inférieur à 3 mégabits par seconde, de préférence compris entre 0,5 mégabits par seconde et 1 mégabit par seconde. Le bus BUS1 est un bus bidirectionnel. A titre d'exemple, le bus BUS1 est un bus de données CAN, notamment selon la norme ISO 11898.

Le bus rapide BUS0 est utilisé pour la transmission des premières données fournies par le circuit de commande maître BMS pour suivre la consigne C. Selon un autre mode de réalisation, les premières données correspondent à un nombre de cellules à connecter pour suivre la consigne C.

Le bus lent BUS1 est utilisé pour l'échange de toutes les autres données entre le circuit de commande maître BMS et chaque module E₁ à E_{N}. En particulier, le bus lent BUS1 est utilisé pour la transmission des deuxièmes données relatives aux mises à jour de la table de priorités.

Le circuit de commande maître BMS peut correspondre à un circuit dédié et/ou peut comprendre un processeur, par exemple un microprocesseur ou un microcontrôleur, adapté à exécuter des instructions d'un programme d'ordinateur stocké dans une mémoire. Le circuit de commande maître BMS comprend notamment une mémoire MEM de stockage de données.

La figure 3 représente un mode de réalisation du module Eᵢ, où i varie de 1 à N, chaque module E₁ à E_{N} pouvant avoir une structure analogue.

Selon le présent mode de réalisation, le module Eᵢ est adapté à fournir une tension U entre la borne positive B+ et la borne négative B-. Le module Eᵢ comprend des cellules C₁ à C_{M} où M est un nombre entier compris entre 2 et 10, de préférence entre 2 et 5, quatre cellules C₁, C₂, C₃ et C₄ étant représentées à titre d'exemple en figure 3. Les cellules C₁ à C_{M} sont reliées entre elles et aux bornes B+ et B- par des interrupteurs. Dans le présent mode de réalisation, pour chaque cellule Cₖ, k étant un nombre entier variant de 1 à M, le module Eᵢ comprend un premier interrupteur SW_{1,k} en série avec la cellule Cₖ et un deuxième interrupteur SW_{2,k} en parallèle de l'ensemble comprenant la cellule Cₖ et l'interrupteur SW_{1,k}. Les M ensembles comprenant la cellule Cₖ et le premier interrupteur SW_{1,k} sont disposés en série entre un noeud A et un noeud B. La commande des interrupteurs SW_{1,k} et SW_{2,k}, k variant de 1 à M, permet de mettre en série entre les noeuds A et B, 1 à M cellules parmi les M cellules C₁ à C_{M}. Dans le présent mode de réalisation, le module Eᵢ comprend en outre un pont inverseur, également appelé pont en H, entre les noeuds A et B et les bornes B+ et B- qui permet d'appliquer la tension présente entre les noeuds A et B entre les bornes B+ et B- dans les deux sens. Selon un mode de réalisation, le pont inverseur comprend un interrupteur SW₃ reliant le noeud A à la borne B+, un interrupteur SW₄ reliant le noeud A à la borne B-, un interrupteur SW₅ reliant le noeud B à la borne B+ et un interrupteur SW₆ reliant le noeud B à la borne B-. A titre d'exemple chaque interrupteur SW_{1,k} et SW_{2,k}, k variant de 1 à M, SW₃, SW₄, SW₅ et SW₆ peut correspondre à un transistor à effet de champ à grille isolée, également appelé transistor MOS, notamment un transistor MOS de puissance, par exemple un transistor MOS à canal N.

Chaque module Eᵢ comprend, en outre, le circuit de commande esclave 12 (µC) adapté à échanger et à recevoir des données émises par le circuit de commande maître BMS sur le bus BUS0 et à échanger des données avec le circuit de commande maître BMS sur le bus BUS1. Le circuit de commande esclave 12 peut correspondre à un circuit dédié et/ou peut comprendre un processeur, par exemple un microprocesseur ou un microcontrôleur, adapté à exécuter des instructions d'un programme d'ordinateur stocké dans une mémoire.

Chaque module Eᵢ comprend, en outre, un circuit de pilotage 14 (Inverter bridge driver) relié aux interrupteurs SW₃, SW₄, SW₅ et SW₆ du pont inverseur et un circuit de pilotage 16 (Transistors driver) relié aux interrupteurs SW_{1,k} et SW_{2,k}, k variant de 1 à M. Chaque circuit de pilotage 14, 16 est adapté à convertir les signaux de commande fournis par le circuit de commande esclave 12 en signaux adaptés à la commande des interrupteurs.

Chaque module Eᵢ comprend, en outre, des capteurs 18 (U, I, T° sensor) reliés au circuit de commande esclave 12. Le module Eᵢ peut comprendre, pour chaque cellule Cₖ, un capteur de température adapté à mesurer la température de la cellule Cₖ. Le module Eᵢ peut en outre comprendre, pour chaque cellule Cₖ, un capteur de tension adapté à mesurer la tension aux bornes de la cellule Cₖ. Le module Eᵢ peut en outre comprendre, pour chaque cellule Cₖ, un capteur de courant adapté à mesurer le courant fourni par la cellule Cₖ. Le circuit de commande esclave 12 de chaque module Eᵢ est adapté à transmettre des troisièmes données au circuit de commande maître BMS sur le bus lent BUS1 représentatives des mesures réalisées par les capteurs 18 du module Eᵢ. Le nombre et le type de capteurs dépend notamment de l'agencement des cellules du module Eᵢ. Dans l'agencement de cellules représenté en figure 3, un seul capteur du courant circulant au noeud A ou au noeud B peut être prévu.

Dans le mode de réalisation illustré en figure 3, un ordre de connexion d'une cellule Cₖ d'un module Eᵢ signifie que la cellule Cₖ doit être connectée en série entre les noeuds A et B du module Eᵢ, ce qui est obtenu en fermant l'interrupteur SW_{1,k} et en ouvrant l'interrupteur SW_{2,k}, et un ordre de déconnexion d'une cellule Cₖ d'un module Eᵢ signifie que la cellule Cₖ ne doit pas être connectée en série entre les noeuds A et B du module Eᵢ, ce qui est obtenu en ouvrant l'interrupteur SW_{1,k} et en fermant l'interrupteur SW_{2,k}. Toutefois, pour un agencement différent des cellules Cₖ du module Eᵢ dans lequel les cellules Cₖ peuvent être agencées en série ou en parallèle entre elles entre les noeuds A et B, un ordre de connexion d'une cellule Cₖ doit en outre préciser dans quelle configuration, série ou parallèle, la cellule Cₖ se trouve par rapport aux autres cellules du module Eᵢ.

Le circuit de commande maître BMS est adapté à déterminer la table de priorités des cellules. Selon un mode de réalisation, la table de priorités est stockée dans la mémoire MEM du circuit de commande maître BMS sous la forme d'un tableau, chaque ligne du tableau correspondant par exemple à une ligne de la mémoire MEM. Pour une batterie comprenant N cellules, la table de priorités comprend N lignes. La table de priorités peut comprendre une première colonne dans laquelle sont stockés des identifiants des cellules de la batterie. A titre d'exemple, pour une batterie comprenant N cellules, les identifiants de cellule vont de 1 à N. La table de priorités peut comprendre une deuxième colonne dans laquelle sont stockés les niveaux de priorité des cellules. A titre d'exemple, pour une batterie comprenant N cellules, les niveaux de priorité des cellules vont de 1 à N, le niveau de priorité "1" étant le plus important et le niveau de priorité "N" étant le moins important.

Le circuit de commande maître BMS met à jour la table de priorités lorsque les niveaux de priorité des cellules sont modifiés. A titre d'exemple, les niveaux de priorité des cellules peuvent être modifiés par le circuit de commande maître BMS notamment à partir des données mesurées par les capteurs des cellules.

Chaque circuit de commande esclave 12 comprend une mémoire MEM' pour le stockage de la table de priorités ou d'une partie de la table de priorités. Selon un mode de réalisation, le circuit de commande maître BMS envoie à chaque circuit de commande esclave 12 la totalité de la table de priorités qui est stockée dans la mémoire MEM' du circuit de commande esclave 12. Selon un autre mode de réalisation, le circuit de commande BMS envoie à chaque circuit de commande esclave 12 la partie de la table de priorités relative aux cellules commandées par le circuit de commande esclave 12. Chaque circuit de commande esclave 12 ne conserve alors dans la mémoire MEM' que la partie de la table de priorités qui le concerne. Dans la suite de la description, lorsque l'on parle d'une table de priorités mémorisée par un circuit de commande esclave 12, cela peut signifier la totalité de la table de priorités ou la partie de la tables de priorités relatives aux cellules commandées par le circuit de commande esclave 12 selon le procédé de commande mis en oeuvre. Pour chaque module Eᵢ, le circuit de commande esclave 12 du module Eᵢ détermine à partir du nombre de cellules demandées par le circuit de commande maître BMS et des niveaux de priorité des cellules qui le composent, les cellules du module Eᵢ à connecter/déconnecter pour suivre la consigne C. Un avantage d'un tel mode de réalisation est que la réactivité de la batterie 10 à réception d'une nouvelle consigne C est optimale.

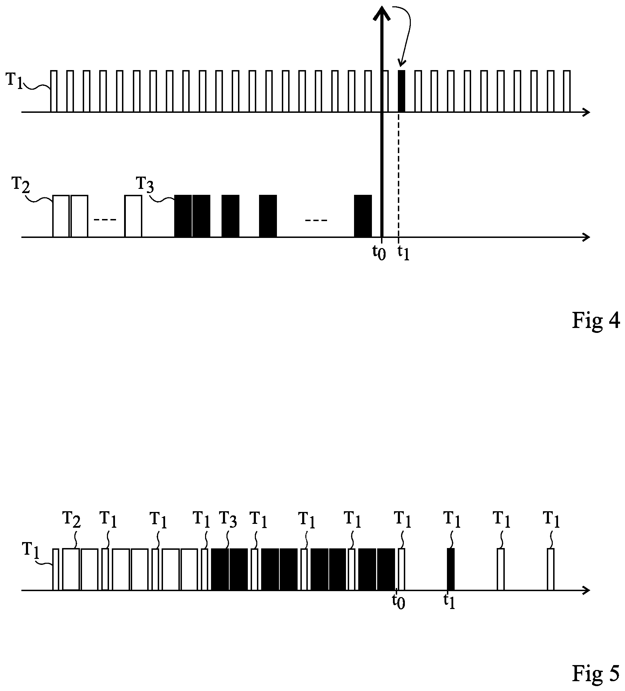

La figure 4 est un chronogramme illustrant les données échangées entre le circuit de commande maître BMS et les circuits de commande esclaves 12 de la batterie 10 représentée en figure 2 pour un mode de réalisation d'un procédé de commande de la batterie 10.

Selon le présent mode de réalisation du procédé de commande, les premières données sont transmises par le circuit de commande maître BMS sur le bus rapide BUS0. Les premières données peuvent être représentatives du nombre total de cellules en série souhaité entre les bornes Phase et Neutre de la batterie 10 lors les modules Eᵢ ont la configuration représentée en figure 3. Lorsque les cellules de chaque module peuvent être mis en série et/ou en parallèle, les premières données peuvent être représentatives de la configuration souhaitée des cellules. Les premières données peuvent être transmises sur le bus rapide BUS0 sous la forme de trames T₁, émises par exemple de façon régulière.

Selon un mode de réalisation du procédé de transmission de données, chaque trame T₁ transmise par le circuit de commande maître BMS est à destination de tous les modules Eᵢ, i variant de 1 à N. Le circuit de commande esclave 12 de chaque module Eᵢ est donc sollicité à chaque trame envoyée par le circuit de commande maître BMS sur le bus rapide BUS0. Le circuit de commande esclave 12 de chaque module Eᵢ est adapté à analyser la trame T₁ pour en extraire la configuration de cellules souhaitée pour suivre la consigne C, par exemple le nombre de cellules à connecter en série.

Selon le présent mode de réalisation du procédé de commande, les deuxièmes données transmises par le circuit de commande maître BMS aux circuits de commande esclaves 12 sur le bus lent BUS1 peuvent être représentatives de la table de priorités ou d'une partie de la table de priorités lorsque celle-ci est mise à jour. En particulier, une mise à jour de la table de priorités peut être transmise par le circuit de commande maître BMS aux circuits de commande esclaves 12 à chaque modification de la table de priorités déterminée par le circuit de commande maître BMS. On a représenté en figure 4 des trames T₂ transmises par le circuit de commande maître BMS aux circuits de commande esclaves 12 sur le bus lent BUS1 et comprenant des données représentatives de la dernière version de la table de données. A titre d'exemple, dans le cas où est transmise à chaque module Eᵢ seulement la partie de la table de priorités relatives aux cellules contenues par le module Eᵢ, les deuxièmes données peuvent être transmises sous la forme de trames T₂, chaque trame T₂ comprenant un entête contenant l'adresse du module Eᵢ désigné suivi d'octets relatifs à la partie de la table de priorités relative au module Eᵢ, et éventuellement suivis d'au moins un octet de contrôle. Le circuit de commande esclave 12 de chaque module Eᵢ est alors adapté à déterminer si la commande qu'il reçoit lui est destiné. Selon un autre exemple, chaque trame T₂ est destinée à tous les modules Eᵢ. Le circuit de commande esclave 12 de chaque module Eᵢ est alors sollicité à chaque trame T₂ envoyée par le circuit de commande maître BMS sur le bus lent BUS1.

Le circuit de commande maître BMS associe un numéro à chaque version de la table de priorités. A titre d'exemple, lorsque le circuit de commande maître BMS met à jour la table de priorités, il modifie le numéro de version associé à la nouvelle table de priorités. Selon un mode de réalisation, chaque trame T2 comprenant des données relatives à une table de priorités comprend en outre le numéro de version de la table de priorités.

Chaque circuit de commande esclave 12 est adapté à transmettre régulièrement au circuit de commande maître BMS le numéro de la version la plus récente de la table de priorités qui est stockée dans la mémoire MEM' . En figure 4, on a représenté par des trames T₃ en noir les données transmises par les circuits de commande esclaves 12 au circuit de commande maître BMS sur le bus lent BUS1 et comprenant les numéros des dernières versions des tables de priorités stockées par les circuits de commande esclaves.

En fonctionnement normal, en l'absence de mise à jour de la table de priorités, chaque circuit de commande esclave 12 a stocké dans la mémoire MEM' une table de priorités qui est utilisée pour déterminer les cellules à connecter/déconnecter. Lorsque le circuit de commande maître BMS met à jour la table de priorités, il transmet la table de priorités mise à jour avec le nouveau numéro de version aux circuits de commande esclaves 12. Chaque circuit de commande esclave 12 mémorise la nouvelle table de priorités tout en conservant en mémoire la version précédente de la table de priorités. Pour chaque module Eᵢ, lorsque le circuit de commande esclave 12 du module Eᵢ a mémorisé la nouvelle table de priorités, il transmet une trame T₃ au circuit de commande maître BMS contenant le numéro de la nouvelle version de la table de priorités ainsi que l'identifiant du module Eᵢ. Toutefois, le circuit de commande esclave 12 continue à traiter les premières données reçues sur le bus rapide BUS0 avec la version précédente de la table de priorités. Le circuit de commande esclave 12 a alors en mémoire la version précédente de la table de priorités et la nouvelle version de la table de priorités.

Le circuit de commande maître BMS détermine quel circuit de commande esclave 12 a reçu la nouvelle version de la table de priorités à partir des trames T₃ reçues. A l'instant t₀, le circuit de commande maître BMS a reçu une confirmation de réception de la nouvelle version de la table de priorités de chaque circuit de commande esclave 12. A l'instant t₁, le circuit de commande maître BMS commande aux circuits de commande esclaves 12 d'utiliser dorénavant la nouvelle version de la table de priorités. Selon un mode de réalisation dans lequel le circuit de commande maître BMS envoie une trame T₂ à tous les circuits de commande esclaves 12, le circuit de commande maître BMS peut mettre à "1" un bit particulier de la trame T₂, ce qui indique à chaque circuit de commande esclave 12 que la nouvelle version de la table de priorités doit être utilisée.

La figure 5 est un chronogramme illustrant les données échangées entre le circuit de commande maître BMS et les circuits de commande esclaves 12 de la batterie 5 représentée en figure 1 pour un mode de réalisation d'un procédé de commande de la batterie 5.

Dans le présent mode de réalisation, les premières données et les deuxièmes données sont transmises sur le bus BUS. Selon un mode de réalisation, les trames T₁ relatives aux premières données sont transmises de façon prioritaire par rapport aux trames T₂ relatives aux deuxièmes données et par rapport aux trames T₃ relatives aux versions de tables de priorités utilisées par les modules Eᵢ. Le reste du procédé est identique à ce qui a été décrit précédemment en relation avec la figure 4. En particulier, à l'instant t₀, le circuit de commande maître BMS a reçu une confirmation de réception de la nouvelle version de la table de priorités de chaque circuit de commande esclave 12 et, à l'instant t₁, le circuit de commande maître BMS commande aux circuits de commande esclaves 12 d'utiliser dorénavant la nouvelle version de la table de priorités.

Des modes de réalisation particuliers de la présente invention ont été décrits. Diverses variantes et modifications apparaîtront à l'homme de l'art. Bien que la figure 3 représente un mode de réalisation d'agencement des cellules et des interrupteurs d'un module Eᵢ, il est clair que la structure de chaque module Eᵢ peut être différente. En particulier, la structure de chaque module Eᵢ peut correspondre à l'une des structures décrites dans la demande de brevet WO 2012/117110.

## Revendications

1. Procédé de commande d'un système électrique (5 ; 10) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄) et des interrupteurs reliant les cellules entre elles et aux troisième et quatrième bornes du module, chaque module comprenant en outre un deuxième circuit de commande (12) des interrupteurs, le système électrique comprenant en outre au moins un premier bus de transmission de données (BUS ; BUS0, BUS1) reliant le premier circuit de commande à chaque deuxième circuit de commande, le procédé comprenant la transmission, par le premier circuit de commande aux deuxièmes circuits de commande, de premières données (T₁) représentatives d'une configuration de cellules électriques à obtenir pour suivre une consigne (C) de fourniture d'une tension et/ou d'un courant entre les première et deuxième bornes, les deuxièmes circuit de commande connectant ou déconnectant les cellules électriques à partir desdites premières données et d'un classement de priorités des cellules électriques,
le procédé comprend, en outre, les étapes suivantes :
a) la détermination par le premier circuit de commande d'une nouvelle version du classement de priorités ;
b) la transmission, par le premier circuit de commande à chaque deuxième circuit de commande, de deuxièmes données (T₂) représentatives d'au moins une partie de la nouvelle version du classement de priorités ;
caractérisé en que le procédé comprend en outre les étapes suivantes :
c) transmission, par chaque deuxième circuit de commande au premier circuit de commande, de troisièmes données (T₃) indiquant la réception par le deuxième circuit de commande de ladite au moins une partie de la nouvelle version du classement de priorités ; et
d) transmission, par le premier circuit de commande aux deuxièmes circuits de commande, d'une commande d'utilisation de la nouvelle version du classement de priorités.

2. Procédé de commande selon la revendication 1, dans lequel le système électrique comprend en outre un deuxième bus de transmission de données (BUS1) reliant le premier circuit de commande (BMS) à chaque deuxième circuit de commande (12), dans lequel le premier circuit de commande transmet les premières données (T₁) aux deuxièmes circuits de commande par le premier bus et transmet les deuxièmes données (T₂) aux deuxièmes circuits de commande par le deuxième bus.

3. Procédé de commande selon la revendication 2, dans lequel les deuxièmes circuits de commande (12) transmettent les troisièmes données (T₃) au premier circuit de commande (BMS) par le deuxième bus (BUS1).

4. Procédé de commande selon la revendication 2 ou 3, dans lequel le premier circuit de commande (BMS) transmet la commande d'utilisation de la nouvelle version du classement de priorités aux deuxièmes circuits de commande (12) par le premier bus.

5. Procédé de commande selon l'une quelconque des revendications 2 à 4, dans lequel le premier circuit de commande (BMS) transmet les premières données (T₁) aux deuxièmes circuits de commande (12) par le premier bus (BUS0) à un premier débit et transmet les deuxièmes données (T₂) aux deuxièmes circuits de commande par le deuxième bus (BUS1) à un deuxième débit inférieur au premier débit.

6. Procédé de commande selon l'une quelconque des revendications 1 à 5, dans lequel les premières données (T₁) sont représentatives du nombre de cellules à connecter en série pour suivre la consigne (C).

7. Procédé de commande selon l'une quelconque des revendications 1 à 6, dans lequel dans lequel les deuxièmes données (T₂) sont représentatives de la totalité du classement de priorités.

8. Procédé de commande selon l'une quelconque des revendications 1 à 6, dans lequel les deuxièmes données (T₂) sont représentatives de la partie du classement de priorités des cellules électriques (C₁, C₂, C₃, C₄) de l'un des modules (Eᵢ).

9. Système électrique (5 ; 10) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄) et des interrupteurs reliant les cellules entre elles et aux troisième et quatrième bornes du module, chaque module comprenant en outre un deuxième circuit de commande (12) des interrupteurs, le système électrique comprenant en outre un premier bus de transmission de données (BUS0) reliant le premier circuit de commande à chaque deuxième circuit de commande et un deuxième bus de transmission de données (BUS1) reliant le premier circuit de commande à chaque deuxième circuit de commande, dans lequel le premier circuit de commande est configuré pour transmettre, aux deuxièmes circuits de commande, des premières données (T₁) représentatives d'une configuration de cellules électriques à obtenir pour suivre une consigne de fourniture d'une tension et/ou d'un courant entre les première et deuxième bornes (Phase, Neutre), les deuxièmes circuits de commande étant configurés pour connecter ou déconnecter les accumulateurs électriques à partir desdites premières données et d'un classement de priorités des cellules électriques, dans lequel le premier circuit de commande est configuré pour déterminer une nouvelle version du classement de priorités et à transmettre à chaque deuxième circuit de commande des deuxièmes données (T₂) représentatives d'au moins une partie de la nouvelle version du classement de priorités, **caractérisé en ce que** chaque deuxième circuit de commande est configuré pour transmettre au premier circuit de commande des troisièmes données (T₃) indiquant la réception par le deuxième circuit de commande de ladite au moins une partie de la nouvelle version du classement de priorités, et **en ce que** le premier circuit de commande est configuré pour transmettre aux deuxièmes circuits de commande une commande d'utilisation de la nouvelle version du classement de priorités.

## Patentansprüche

1. Verfahren zur Steuerung eines elektrischen Systems (5; 10), das eine erste Steuerschaltung (BMS) und eine Vielzahl von Modulen (Eᵢ) aufweist, die in Reihe zwischen einem ersten und einem zweiten Anschluss (Phase, Neutre) angeordnet sind, wobei jedes Modul einen dritten und einen vierten Anschluss (B+, B-), aufweist, wobei mindestens einer der dritten und vierten Anschlüsse jedes Moduls mit einem der dritten und vierten Anschlüsse eines anderen Moduls verbunden ist, wobei jedes Modul elektrische Zellen (C₁, C₂, C₃, C₄) und Schalter umfasst, die die Zellen untereinander und mit den dritten und vierten Anschlüssen des Moduls verbinden, wobei jedes Modul ferner eine zweite Schaltersteuerschaltung (12) aufweist, wobei das elektrische System ferner mindestens einen ersten Datenübertragungsbus (BUS; BUS0, BUS1) umfasst, der die erste Steuerschaltung mit jeder zweiten Steuerschaltung koppelt, wobei das Verfahren die Übertragung von ersten Daten (T₁) durch die erste Steuerschaltung an die zweite Steuerschaltung umfasst, wobei die Daten für eine zu erhaltende Konfiguration der elektrischen Zellen repräsentativ sind, um einem Sollwert (C) für die Abgabe einer Spannung und/oder eines Stroms zwischen dem ersten und dem zweiten Anschluss zu folgen, wobei die zweiten Steuerschaltungen die elektrischen Zellen auf der Grundlage der ersten Daten und einer Klassifizierung der Prioritäten der elektrischen Zellen verbinden oder trennen, wobei das Verfahren außerdem die folgenden Schritte aufweist:
a) Bestimmen einer neuen Version der Prioritätsklassifizierung durch die erste Steuerschaltung;
b) Übertragen von zweiten Daten (T₂), die für mindestens einen Teil der neuen Version der Prioritätsklassifizierung repräsentativ sind, durch die erste Steuerschaltung an jede zweite Steuerschaltung;
**dadurch gekennzeichnet, dass** das Verfahren ferner die folgenden Schritte aufweist:
c) Übertragen von dritten Daten (T₃), die den Empfang des mindestens einen Teils der neuen Version der Prioritätsklassifizierung durch die zweite Steuerschaltung anzeigen, durch jede zweite Steuerschaltung an die erste Steuerschaltung; und
d) Übertragen eines Befehls zur Verwendung der neuen Version der Prioritätsklassifizierung durch die erste Steuerschaltung an die zweiten Steuerschaltungen.

2. Steuerungsverfahren nach Anspruch 1, wobei das elektrische System ferner einen zweiten Datenübertragungsbus (BUS1) aufweist, der die erste Steuerschaltung (BMS) mit jeder zweiten Steuerschaltung (12) verbindet, wobei die erste Steuerschaltung die ersten Daten (T₁) über den ersten Bus an die zweiten Steuerschaltungen überträgt und die zweiten Daten (T₂) über den zweiten Bus an die zweiten Steuerschaltungen überträgt.

3. Steuerungsverfahren nach Anspruch 2, wobei die zweiten Steuerschaltungen (12) die dritten Daten (T₃) über den zweiten Bus (BUS1) an die erste Steuerschaltung (BMS) übertragen.

4. Steuerungsverfahren nach Anspruch 2 oder 3, wobei die erste Steuerschaltung (BMS) den Befehl zur Verwendung der neuen Version der Prioritätsklassifizierung über den ersten Bus an die zweiten Steuerschaltungen (12) überträgt.

5. Steuerungsverfahren nach einem der Ansprüche 2 bis 4, wobei die erste Steuerschaltung (BMS) die ersten Daten (T₁) an die zweiten Steuerschaltungen (12) über den ersten Bus (BUS0) mit einer ersten Rate und die zweiten Daten (T₂) an die zweiten Steuerschaltungen über den zweiten Bus (BUS1) mit einer zweiten Rate, die kleiner als die erste Rate ist, überträgt.

6. Steuerungsverfahren nach einem der Ansprüche 1 bis 5, wobei die ersten Daten (T₁) repräsentativ für die Anzahl der Zellen sind, die in Reihe zu schalten sind, um dem Sollwert (C) zu folgen.

7. Steuerungsverfahren nach einem der Ansprüche 1 bis 6, wobei die zweiten Daten (T₂) repräsentativ für die gesamte Prioritätsklassifizierung sind.

8. Steuerungsverfahren nach einem der Ansprüche 1 bis 6, wobei die zweiten Daten (T2) repräsentativ für den Teil der Klassifizierung der Prioritäten der elektrischen Zellen (C₁, C₂, C₃, C₄) eines der Module (Eᵢ) sind.

9. Ein elektrisches System (5; 10) mit einer ersten Steuerschaltung (BMS) und einer Vielzahl von Modulen (Eᵢ), die in Reihe zwischen einem ersten und einem zweiten Anschluss (Phase, Neutre) angeordnet sind, wobei jedes Modul (Eᵢ) einen dritten und einen vierten Anschluss (B+, B-) aufweist, wobei mindestens einer der dritten und vierten Anschlüsse jedes Moduls mit einem der dritten und vierten Anschlüsse eines anderen Moduls gekoppelt ist, wobei jedes Modul elektrische Zellen (C₁, C₂, C₃, C₄) und Schalter aufweist, die die Zellen miteinander und mit dem dritten und vierten Anschluss des Moduls verbinden, wobei jedes Modul ferner eine zweite Schaltersteuerschaltung (12) aufweist, wobei das elektrische System ferner einen ersten Datenübertragungsbus (BUSO), der die erste Steuerschaltung mit jeder zweiten Steuerschaltung koppelt, und einen zweiten Datenübertragungsbus (BUS1), der die erste Steuerschaltung mit jeder zweiten Steuerschaltung koppelt, aufweist, wobei die erste Steuerschaltung so konfiguriert ist, dass sie an die zweiten Steuerschaltungen erste Daten (T₁) überträgt, die für eine Konfiguration der elektrischen Zellen repräsentativ sind, die erhalten werden soll, um einem Sollwert für die Abgabe einer Spannung und/oder eines Stroms zwischen den ersten und zweiten Anschlüssen (Phase, Neutre) zu folgen, wobei die zweiten Steuerschaltungen so konfiguriert sind, dass sie die elektrischen Zellen auf der Grundlage der ersten Daten und einer Prioritätsklassifizierung der elektrischen Zellen verbinden oder trennen, wobei die erste Steuerschaltung so konfiguriert ist, dass sie eine neue Version der Prioritätsklassifizierung bestimmt und zu jeder zweiten Steuerschaltung zweite Daten (T₂) überträgt, die für zumindest einen Teil der neuen Version der Prioritätsklassifizierung repräsentativ sind, **dadurch gekennzeichnet, dass** jede zweite Steuerschaltung so konfiguriert ist, dass sie an die erste Steuerschaltung dritte Daten (T₃) überträgt, die den Empfang des genannten mindestens einen Teils der neuen Version der Prioritätsklassifizierung durch die zweite Steuerschaltung anzeigen, und dass die erste Steuerschaltung so konfiguriert ist, dass sie an die zweiten Steuerschaltungen einen Befehl zur Verwendung der neuen Version der Prioritätsklassifizierung überträgt.

## Claims

1. A method of controlling an electric system (5; 10) comprising a first control circuit (BMS) and a plurality of modules (Eᵢ) arranged in series between first and second terminals (Phase, Neutre), each module comprising third and fourth terminals (B+, B-), at least one of the third and fourth terminals of each module being coupled to one of the third and fourth terminals of another module, each module comprising electric cells (C₁, C₂, C₃, C₄) and switches coupling the cells to one another and to the third and fourth terminals of the module, each module further comprising a second switch control circuit (12), the electric system further comprising at least one first data transmission bus (BUS ; BUS0, BUS1) coupling the first control circuit to each second control circuit, the method comprising the transmission, by the first control circuit to the second control circuits, of first data (T₁) representative of an electric cell configuration to be obtained to follow a set point (C) for the delivery of a voltage and/or of a current between the first and second terminals, the second control circuits connecting or disconnecting the electric cells based on said first data and on a classification of the priorities of the electric cells, the method further comprising the steps of:
a) determination by the first control circuit of a new version of the priority classification;
b) transmission, by the first control circuit to each second control circuit, of second data (T₂) representative of at least a portion of the new version of the priority classification;
**characterized in that** the method further comprises the steps of:
c) transmission, by each second control circuit to the first control circuit, of third data (T₃) indicating the reception by the second control circuit of said at least a portion of the new version of the priority classification; and
d) transmission, by the first control circuit to the second control circuits, of an order to use the new version of the priority classification.

2. The control method according to claim 1, wherein the electric system further comprises a second data transmission bus (BUS1) coupling the first control circuit (BMS) to each second control circuit (12), wherein the first control circuit transmits the first data (T₁) to the second control circuits over the first bus and transmits the second data (T₂) to the second control circuits over the second bus.

3. The control method according to claim 2, wherein the second control circuits (12) transmit the third data (T₃) to the first control circuit (BMS) over the second bus (BUS1).

4. The control method according to claim 2 or 3, wherein the first control circuit (BMS) transmits the order to use the new version of the priority classification to the second control circuits (12) over the first bus.

5. The control method according to any of claims 2 to 4, wherein the first control circuit (BMS) transmits the first data (T₁) to the second control circuits (12) over the first bus (BUS0) at a first rate and transmits the second data (T₂) to the second control circuits over the second bus (BUS1) at a second rate smaller than the first rate.

6. The control method according to any of claims 1 to 5, wherein the first data (T₁) are representative of the number of cells to be series-connected to follow the set point (C).

7. The control method according to any of claims 1 to 6, wherein the second data (T₂) are representative of the entire priority classification.

8. The control method according to any of claims 1 to 6, wherein the second data (T₂) are representative of the portion of the classification of the priorities of the electric cells (C₁, C₂, C₃, C₄) of one of the modules (Eᵢ).

9. An electric system (5; 10) comprising a first control circuit (BMS) and a plurality of modules (Eᵢ) arranged in series between first and second terminals (Phase, Neutre), each module (Eᵢ) comprising third and fourth terminals (B+, B-), at least one of the third and fourth terminals of each module being coupled to one of the third and fourth terminals of another module, each module comprising electric cells (C₁, C₂, C₃, C₄) and switches coupling the cells to one another and to the third and fourth terminals of the module, each module further comprising a second switch control circuit (12), the electric system further comprising a first data transmission bus (BUS0) coupling the first control circuit to each second control circuit and a second data transmission bus (BUS1) coupling the first control circuit to each second control circuit, wherein the first control circuit is configured to transmit, to the second control circuits, first data (T₁) representative of an electric cell configuration to be obtained to follow a set point for the delivery of a voltage and/or of a current between the first and second terminals (Phase, Neutre), the second control circuits being configured to connect or disconnect the electric cells based on said first data and on an electric cell priority classification, wherein the first control circuit is configured to determine a new version of the priority classification and to transmit to each second control circuit second data (T₂) representative of at least a portion of the new version of the priority classification, **characterized in that** each second control circuit is configured to transmit to the first control circuit third data (T₃) indicating the reception by the second control circuit of said at least a portion of the new version of the priority classification, and **in that** the first control circuit is configured to transmit to the second control circuits an order to use the new version of the priority classification.
